# EUROPÄISCHE PATENTSCHRIFT

(11) **EP 4 001 363 B1**
(45) Veröffentlichungstag und Bekanntmachung des Hinweises auf die Patenterteilung: **28.08.2024**
(21) Anmeldenummer: 21000322.4
(22) Anmeldetag: 11.11.2021
(51) Int. Cl.: C09D 5/02, C09D 7/61, C09D 17/00

(54) **TITANDIOXIDFREIE DISPERSIONSFARBE OHNE KONSERVIERUNGSMITTEL**
TITANIUM DIOXIDE-FREE DISPERSION PAINT WITHOUT PRESERVATIVES
PEINTURE EN DISPERSION EXEMPTE DE DIOXYDE DE TITANE SANS CONSERVATEUR

(30) Priorität: 11.11.2020 DE 102020006913
(43) Veröffentlichungstag der Anmeldung: 25.05.2022
(73) Patentinhaber: Baumit Beteiligungen GmbH, 2754 Waldegg (AT)
(72) Erfinder: JANKE, Robert, 12359 Berlin (DE); PAUL, Thorsten, 13156 Berlin (DE)
(74) Vertreter: Müllner, Martin

(56) Entgegenhaltungen:
- EP-A1- 2 660 294
- WO-A1-2020/002102
- CN-A- 101 787 237
- CN-A- 106 009 808
- GB-A- 743 685
- ELERT KERSTIN ET AL: "Pigment-binder interactions in calcium-based tempera paints", DYES AND PIGMENTS, vol. 148, 11 September 2017 (2017-09-11), pages 236 - 248, XP085235972, ISSN: 0143-7208, DOI: 10.1016/J.DYEPIG.2017.09.013

## Beschreibung

Die Erfindung betrifft eine verbesserte Dispersionsfarbe, die vollständig titandioxidfrei hergestellt wird und keinerlei Konservierungsstoffe benötigt. Die erfindungsgemäße Dispersionsfarbe ist für den Innen- und Außenbereich geeignet.

Aus dem Stand der Technik sind verschiedenste titandioxidbasierte Dispersionsfarben bekannt, welche für die Beschichtung mineralischer Untergründe nach D)N18363 verwendbar sind. Diese Dispersionsfarben enthalten Titandioxid als Pigment mit sehr günstigen optischen Eigenschaften. In jüngster Zeit hat die Verarbeitung Titandioxid jedoch Bedenken hervorgerufen aufgrund potentieller karzinogener Wirkungen. Diese zwingen zu erhöhten Schutzanforderungen bei Produktion und Verwendung sowie zur Kennzeichnungspflicht von gestrichenem Bauschutt. Dispersionsfarben, die beispielsweise Zinksulfid als Weißpigment enthalten können, sind aus der WO 2020/002102 A1 bekannt. Es besteht jedoch weiterer Bedarf an Dispersionsfarben mit alternativen Pigmenten.

Überraschenderweise hat sich bezeigt, dass die nachfolgend beschriebene Dispersionsfarbe diese Aufgabe löst. Die erfindungsgemäße Dispersionsfarbe basiert auf der Verwendung von Zinksulfid als Pigment. Die erfindungsgemäße Dispersionsfarbe wird im Patentanspruch 1 definiert. Vorteilhafte Weiterbildungen sind Gegenstand der Unteransprüche.

Erfindungsgemäß enthält die Dispersionsfarbe 2 - 30% Polymerdispersion (fest), 5 - 50% Zinksulfid (ZnS), 15-50 % Füllstoff, maximal 0,5 - 5% eines Siliconates (Feststoff) sowie zu 100% ergänzte Anteile an Wasser. Bei dem Siliconat handelt es sich um ein Alkali oder Erdalkalialkylsiliconat, w. z. B. Natrium-, Kalium-, oder Calciummethylsiliconat. Das am meisten bevorzugte Siliconat ist Kaliummethylsilikonat. Der Anteil des Siliconates liegt zwischen 0,5 und 5% Siliconat (Feststoff), bevorzugt zwischen 1 und 3%. Alle Prozentangaben beziehen sich auf die Gewichtsanteile (Gew. %). Es versteht sich von selbst, dass sich die Komponenten zu 100 % ergänzen.

Die erfindungsgemäße Dispersionsfarbe benötigt keinerlei Konservierungsstoff als Zusatzmittel, Die erfindungsgemäßen Dispersionsfarben haben eine ausgezeichnete Lagerstabilität von deutlich über 6 Monaten, selbst wenn der Siliconatzusatz im unteren Bereich liegt. Für die Verwendung im Außenbereich können der erfindungsgemäßen Dispersionsfarbe zusätzlich biozide Stoffe, wie beispielweise Algizide und Fungizide zugesetzt werden.

Die Dispersionsfarbe wird durch das Siliconat und ggf. durch zusätzliche wasserlösliche Hydroxyde, w. z. B. NaOH, KOH oder Ca(OH)₂ auf einen pH-Bereich von 8 bis 12 eingestellt. Bevorzugt liegt der pH-Wert im Bereich von 9 - 11. Als Alkali- oder Erdalkalialkylsiliconate werden Substanzen der allgemeinen Formel R-Si(OH)₂OM^{A} bzw. [R-Si(OH)₂O]₂M^{E} bezeichnet, worin M^{A} für ein Alkalimetall (z. B. Lithium, Natrium, Kalium), M^{E} für ein Erdalkalimetall (z. B. Magnesium oder Calcium) steht und R für einen Alkylrest, wie beispielsweise Methyl, Ethyl, ^{*n*-}Propyl, ^{*i*-}Propyl, *ⁿ* Butyl, ^{*i*-}Butyl, oder ^{*t*-}Butyl, steht. Wegen seiner kommerziellen Zugänglichkeit ist Kaliummethylsiliconat besonders bevorzugt. Das Alkali- bzw. Erdalkalialkylsiliconat reagiert mit dem Kohlendioxid aus der Luft zu einem Alkylsiliconharz und dem entsprechenden Alkali- bzw. Erdalkalicarbonat.

Bei der Auswahl der Polymerdispersionen, die erfindungsgemäße 2 - 30% der Dispersionsfarbe ausmachen, können grundsätzlich alle aus dem Stand der Technik bekannten Polymerdispersionen verwendet werden, welche auch für Dispersionssilikatsysteme benutzt werden. Hierunter fallen Polymere basierend auf Carbonsäurevinylester, insbesondere Vinylacetat, Vinylpropionat und Carbonsäurevinylester, sowie M-Vinylpyrrolidon und Derivate hiervon, ungesättigte Carbonsäuren, deren Ester und Amide sowie deren Anhydride, wie beispielsweise Ethylene und Propylen, sowie Acrylnitril. In bevorzugter Weise können ungesättigte Carbonsäuren wie beispielsweise Acryl- und Metacrylsäure und ungesättigte Carbonsäureester, beispielsweise Acryl- und Metacrylsäureester verwendet werden. Der Alkoholrest der Ester enthält typischerweise 1 - 12 Kohlenstoffatome und kann linear oder verzweigt sein, Cycloaliphaten oder Aromaten enthalten und zusätzlich oder alternativ durch Hydroxylgruppen, Halogenatome oder Epoxidgruppen substituiert sein. Die Verwendung von gemischten Polymeren, bestehend aus unterschiedlichen Monomeren, ist möglich. Besonders bevorzugt ist der Einsatz von Styrol und dessen Derivaten.

Als Pigment wird für die erfindungsgemäße Farbe Zinksulfid (ZnS) als Pigment in einem Anteil von 5-50% statt dem üblichen Titandioxid (TiO₂) verwendet. Durch die Verwendung von Zinksulfid als alleinigem Pigment kann die Füllstoff-Kombination der späteren Anwendung optimiert werden. Gegenüber bekannten Mischungen mit Bariumsulfat ist die Bandbreite der möglichen Zusammensetzungen deutlich breiter. Bariumsulfat ist zudem deutlich schwerer, so dass die Masse der erfindungsgemäßen Zubereitungen deutlich geringer ist.

Erfindungsgemäß erfolgt die Verwendung von Zinksulfid (ZnS) ohne weitere Pigmente.

Die erfindungsgemäße Dispersionsfarbe enthält neben der Polymerdispersion und dem Siliconat 0 - 20% Co-Bindemittel (insbesondere zur Einstellung von Viskosität, Deckvermögen und/oder Abriebfestigkeit), bevorzugt 2 - 5%. Ferner enthält die erfindungsgemäße Dispersionsfarbe sowie 15 - 50% Füllstoffe, bevorzugt 25 - 50%.

Als Füllstoffe werden Calciumcarbonat, Talkum, Kaolin, Kreide und Aluminosilikat zugegeben.

Weiterhin kann die erfindungsgemäße Dispersionsfarbe zusätzliche Additive wie Dispergiermittel, Verdickungsmittel, Stabilisatoren, Entschäumer und/oder Hydrophobierungsmittel enthalten.

Die Erfindung betrifft auch die Verwendung der erfindungsgemäßen zinksulfidbasierten Dispersionsfarbe für die Anwendung im Innen- und Außenbereich. Es hat sich herausgestellt, dass aufgrund der Abwesenheit von Konservierungsstoffen und Lösungsmitteln der Farbe für den Innenbereich keine allergischen Reaktionen ausgelöst werden.

Insbesondere hat sich herausgestellt, dass die Verwendung der erfindungsgemäßen Dispersionsfarbe auf der Basis von Zinksulfid mit Siliconaten eine Verbesserung der Wasseraufnahme und der Wasserdurchlässigkeit eintritt. Diese Eigenschaften sind insbesondere beim Zweitauftrag erkennbar: Der Zweitauftrag der Farbe kann daher sehr gleichmäßig erfolgen, insbesondere bei großen Flächen.

insbesondere hat sich herausgestellt, dass bei Verwendung der erfindungsgemäßen Farbe bedenkliches Titandioxid gänzlich vermieden werden kann, ohne dass die vorteilhaften Eigenschaften der Farbe verloren gehen.

Darüber hinaus wurde festgestellt, dass die erfindungsgemäße Dispersionsfarbe nach dem Auftrag eine sehr gute Nassabriebsfestigkeit aufweist. Weiterhin überraschend ist, dass sich mit den erfindungsgemäßen Zubereitungen eine hervorragend deckende Farbe mit einem rein weißen Farbton erzielen lässt, während alternative Zubereitungen ohne Titandioxid mit alternativen Pigmenten häufig einen Farbstich aufweisen.

Die Verwendung von Zinksulfid statt Titandioxid als Pigment funktioniert grundsätzlich mit allen Beschichtungen. Entsprechende Zubereitungen können daher zu Innenwandfarben und Fassadenfarben verarbeitet werden.

Weiterhin kann Zinksulfid auch bei anderen Zubereitungssystemen mit Erfolg angewandt werden, wie z.B.:
- Grundierungen (Innen und Aussen)
- Putzsysteme
- Kleber
- Spachtelmassen

Hervorzuheben ist insbesondere, dass die oben beschriebenen Zusammensetzungen auch wasserfrei herstellbar sind. Dies erlaubt das Zurverfügungstellen einer pulvrigen Trockenfarbe, die der Verarbeiter selbst mit Wasser anrühren kann. Dies spart u.a. erhebliche Transportkosten. Ferner muss die Pulverzubereitung nicht frostfrei gelagert werden.

### Beispiele:

Die Erfindung wird durch die nachfolgenden, beispielhaften Zusammensetzungen näher beschrieben. Diese sollen jedoch keine Limitierung der Erfindung darstellen. Der Fachmann auf dem Gebiet kann, basierend auf der vorliegenden Beschreibung sowie seinem allgemeinen Fachwissen weitere Ausführungsformen der Erfindung ausarbeiten, ohne erfinderisch tätig werden zu müssen:

### Beispiel 1

| | **Innenfarbe, Nassabriebsklasse 3, Deckvermögen Klasse 2 bei 7m²** | **Innenfarbe, Nassabriebsklasse 2, Deckvermögen Klasse 1 bei 7m²** | **Innenfarbe, Nassabriebsklasse 1, Deckvermögen Klasse 1 bei 8m²** |
|---|---|---|---|
| **Rohstoff** | **Anteil in Gew. %** | **Anteil in Gew. %** | **Anteil in Gew. %** |
| **Polymerdispersion (Feststoff)** | 4 | 6 | 10 |
| **Zinksulfid (ZnS)** | 7 | 20 | 35 |
| **Füllstoffe** | 45 | 32 | 17 |
| **Methylsiliconat** | 2 | 2 | 2 |
| **Alkallhydroxid** | 0,1 | 0,1 | 0,1 |
| **Additive** | 2 | 2 | 2 |
| **Wasser** | 39,9 | 37,9 | 33,9 |

### Beispiel 2

| | **Innenfarbe, Nassabriebsklasse 3, Deckvermögen Klasse 2 bei 7m²** | **Innenfarbe, Nassabriebsklasse 2, Deckvermögen Klasse 1 bei 7m²** | **Innenfarbe, Nassabriebsklasse 1, Deckvermögen Klasse 1 bei 8m²** |
|---|---|---|---|
| **Rohstoff** | **Anteil in Gew. %** | **Anteil in Gew. %** | **Anteil in Gew. %** |
| **Polymerdispersion (Feststoff)** | 4 | 6 | 10 |
| **Zinksulfid (ZnS)** | 8 | 22 | 36 |
| **Füllstoffe** | 44 | 30 | 16 |
| **Methylsiliconat** | 2 | 2 | 2 |
| **Alkalihydroxid** | 0,1 | 0,1 | 0,1 |
| **Additive** | 2 | 2 | 2 |
| **Wasser** | 39,9 | 37,9 | 33,9 |

Eine besonders bevorzugte Ausführungsform der Erfindung enthält als Füllstoffe Calciumcarbonat (Korngrößen d₅₀ ≤ 25 µm), Talkum (Korngrößen d₅₀ ca. 5,7 µm), Kaolin, Kreide und Aluminosilikat. Das Calciumcarbonat kann insbesondere als Gemisch verschiedener Korngrößen verarbeitet werden, insbesondere als Mischung von d₅₀ ca. 25 µm und d₅₀ ca. 2µm im Massenverhältnis von ca. 2:1.

### Bespiel 3

| | **Pulverfarbe Nassabriebsklasse 2 Deckvermögen Klasse 2/7m²** | **Pulverfarbe Nassabriebsklasse 2 Deckvermögen Klasse 1/7m²** |
|---|---|---|
| **Rohstoff** | **Anteil in Gew. %** | **Anteil in Gew.%** |
| **Polymerdispersionspulver** | 25 | 25 |
| **Weiß-Pigment (ZnS)** | 25 | 35 |
| **Füllstoffe** | 49 | 39 |
| **Additive** | 1 | 1 |
| **Zugabe g Wasser auf 100g Pulver** | 66,67 | 66,67 |

### Bespiel 4

| | **Pulverfarbe Nassabriebsklasse 2 Deckvermögen Klasse 2/7m²** | **Pulverfarbe Nassabriebsklasse 2 Deckvermögen Klasse 1/7m²** |
|---|---|---|
| **Rohstoff** | **Anteil in Gew. %** | **Anteil in Gew.%** |
| **Polymerdispersionspulver** | 26 | 24 |
| **Weiß-Pigment (ZnS)** | 24 | 36 |
| **Füllstoffe** | 49 | 39 |
| **Additive** | 1 | 1 |
| **Zugabe g Wasser auf 100g Pulver** | 66,67 | 66,67 |

Besonders bevorzugte Ausführungsformen der Pulverfarben enthalten als Füllstoffe Calciumcarbonat (Korngrößen d₅₀ ≤ 25 µm), Talkum (Korngrößen d₅₀ ca. 5,7 µm), Kaolin, Kreide und Aluminosilikat. Das Calciumcarbonat kann hierbei insbesondere als Gemisch verschiedener Korngrößen verarbeitet werden, insbesondere als Mischung von d₅₀ ca. 25 µm und d₅₀ ca. 2µm im Massenverhältnis von ca. 2:1.

Zu den Pulverzubereitungen der Beispiele 3-4 werden jeweils ca. 667 ml Wasser pro Kilogramm Pulver zugegeben und gerührt.

Die erfindungsgemäßen Dispersionsfarben zeigen eine Lagerstabilität von deutlich mehr als 6 Monaten und sind ausgezeichnet verarbeitungsfähig. Sie weisen ferner eine ausgezeichnete UV- und Witterungs-Stabilität auf.

## Patentansprüche

1. Dispersions-Farbe für Innen und Außen, enthaltend
a) 2-30% Polymerdispersion gerechnet als Feststoffanteil
b) 5-50% Zinksulfid als Pigment,
c) 15-50% Füllstoffe, ausgewählt aus der Gruppe Calciumcarbonat, Talkum, Kaolin, Kreide und Aluminosilikat,
d) 0,5-5% Siliconat und
e) zu 100% ergänzte Anteile an Wasser, **dadurch gekennzeichnet, dass** sie Zinksulfid ohne weitere Pigmente enthält.

2. Farbe nach Anspruch 1, **dadurch gekennzeichnet, dass** sie 2% Siliconat enthält.

3. Farbe nach Anspruch 1 oder 2, **dadurch gekennzeichnet, dass** ihr pH-Wert auf 8-12 eingestellt ist.

4. Farbe nach Anspruch 3, **dadurch gekennzeichnet, dass** der pH-Wert mittels Siliconat eingestellt wurde.

5. Farbe nach mindestens einem der Ansprüche 1 bis 4, **dadurch gekennzeichnet, dass** sie als weitere Additive Co-Bindemittel, Dispergiermittel, Verdickungsmittel, Stabilisatoren, Entschäumer und/oder Hydrophobierungsmittel enthält.

6. Farbe nach mindestens einem der Ansprüche 1 bis 5, **dadurch gekennzeichnet, dass** die Polymerdispersion ausgewählt ist aus Carbonsäurevinylester, insbesondere Vinylacetat, Vinylpropionat und Carbonsäurevinylester, sowie M-Vinylpyrrolidon und Derivaten hiervon, ungesättigte Carbonsäuren, deren Ester und Amide sowie deren Anhydride, wie beispielsweise Ethylene und Propylen, Acrylnitril, Acryl- und Methacrylsäure Acryl- und Metacrylsäureester, wobei der Alkoholrest der Ester 1-12 Kohlenstoffatome enthält und linear oder verzweigt sein kann, Cycloaliphaten oder Aromaten enthalten kann und zusätzlich oder alternativ durch Hydroxylgruppen, Halogenatome oder Epoxidgruppen substituiert sein kann.

7. Farbe nach mindestens einem der Ansprüche 1 bis 6, **dadurch gekennzeichnet, dass** sie zusätzlich biozide Stoffe, wie beispielweise Algizide und Fungizide, enthält.

8. Wasserfreie Farbzusammensetzung zum Anrühren einer Dispersions-Farbe für Innen und Außen, enthaltend
a) 5-50% Polymerdispersionspulver gerechnet als Feststoffanteil
b) 5-50% Zinksulfid als Pigment,
c) 15-50% Füllstoffe, ausgewählt aus der Gruppe Calciumcarbonat, Talkum, Kaolin, Kreide und Aluminosilikat, **dadurch gekennzeichnet, dass** sie Zinksulfid ohne weitere Pigmente enthält.

## Claims

1. A dispersion paint for inside and outside use, containing
a) 2 - 30% polymeric dispersion calculated as solids content,
b) 5 - 50% zinc sulphide as pigment,
c) 15 - 50% filling material selected from the group consisting of calcium carbonate, talcum, kaolin, chalk and aluminosilicate,
d) 0,5 - 5% siliconate and
e) supplemented to 100% with water content, **characterised in that** it contains zinc sulphide without further pigments.

2. The paint according to claim 1, **characterised in that** it contains 2% siliconate.

3. The paint according to claim 1 or 2, **characterised in that** its pH value is set to 8 - 12.

4. The paint according to claim 3, **characterised in that** the pH value has been set by using silicone.

5. The paint according to at least one of claims 1 to 4, **characterised in that** it contains co-binders, dispersants, thickeners, stabilisers, defoamers and/or water repellents as further additives.

6. The paint according to at least one of claims 1 to 5, **characterised in that** the polymeric dispersion is selected from carboxylic acid vinyl esters, in particular vinyl acetate, vinyl propionate and carboxylic acid vinyl esters, as well as M-vinyl pyrrolidone and derivatives thereof, unsaturated carboxylic acids, the esters and amides thereof as well as the anhydrides thereof, such as ethylenes and propylenes, acrylonitrile, acrylic and methacrylic acid, acrylic and methacrylic acid esters, wherein the alcohol residue of the esters contains 1 - 12 carbon atoms and may be linear or branched, may contain cycloaliphates or aromatics and may additionally or alternatively be substituted by hydroxyl groups, halogen atoms or epoxide groups.

7. The paint according to at least one of claims 1 to 6, **characterised in that** it additionally contains biocidal agents, such as algaecides and fungicides.

8. An anhydrous paint composition for mixing a dispersion paint for inside and outside use, containing
a) 5 - 50% polymeric dispersion powder calculated as solids content
b) 5 - 50% zinc sulphide as pigment,
c) 15 - 50% filling material selected from the group consisting of calcium carbonate, talcum, kaolin, chalk and aluminosilicate, **characterised in that** it contains zinc sulphide without any further pigments.

## Revendications

1. Peinture à dispersion pour l'intérieur et l'extérieure, contenant
a) 2 à 30 % d'une dispersion de polymères, calculé en proportion des matières solides
b) 5 à 50 % de sulfure de zinc en tant que pigment,
c) 15 à 50 % de charges, choisies dans le groupe formé par le carbonate de calcium, le talc, le kaolin, la craie et le silicate d'aluminium,
d) 0,5 à 5 % de siliconate, et
e) un complément à 100% qui est de l'eau,
**caractérisée en ce qu'**elle contient du sulfure de zinc comme l'unique pigment.

2. Peinture selon la revendication 1, **caractérisée en ce qu'**elle contient 2 % de siliconate.

3. Peinture selon les revendications 1 ou 2, **caractérisée en ce que** son pH est réglé de manière à être compris entre 8 et 12.

4. Peinture selon la revendication 3, **caractérisée en ce que** le pH est réglé au moyen de siliconate.

5. Peinture selon au moins une des revendications 1 à 4, **caractérisée en ce qu'**elle contient, en tant qu'additifs supplémentaires, des liants auxiliaires, des agents dispersants, des épaississants, des agents stabilisants, des agents anti-mousse et/ou des agents hydrophobants.

6. Peinture selon au moins une des revendications 1 à 5, **caractérisée en ce que** la dispersion de polymères est choisie parmi les esters vinyliques d'acides carboxyliques, s'agissant notamment d'acétate de vinyle, de propionate de vinyle et d'esters vinyliques d'acides carboxyliques, ainsi que parmi la m-vinylpyrrolidone et ses dérivés, les acides carboxyliques insaturés, leurs esters et amides ainsi que leurs anhydrides, des exemples étant l'éthylène et le propylène, l'acrylonitrile, l'acide acrylique et méthacrylique, les esters d'acide acrylique et méthacrylique, le groupement alcool des esters contenant 1 à 12 atomes de carbone et pouvant être linéaire ou ramifié, pouvant contenir des groupements alicycliques ou aromatiques et pouvant, de manière supplémentaire ou alternative, être substitué avec des groupements hydroxyle, des atomes d'halogène ou des groupements époxyde.

7. Peinture selon au moins une des revendications 1 à 6, **caractérisée en ce qu'**elle contient en outre des matières biocides, s'agissant par exemple d'algicides ou de fongicides.

8. Composition de peinture anhydre permettant de préparer, sous agitation, une peinture à dispersion pour l'intérieur et l'extérieur, contenant
a) 5 à 50 % d'une dispersion de polymères, calculé en proportion des matières solides
b) 5 à 50 % de sulfure de zinc en tant que pigment,
c) 15 à 50 % de charges, choisies dans le groupe formé par le carbonate de calcium, le talc, le kaolin, la craie et le silicate d'aluminium,
**caractérisée en ce qu'**elle contient du sulfure de zinc comme l'unique pigment.
